# EUROPÄISCHE PATENTSCHRIFT

(11) **EP 2 663 892 B1**
(45) Veröffentlichungstag und Bekanntmachung des Hinweises auf die Patenterteilung: **18.03.2020**
(21) Anmeldenummer: 12702439.6
(22) Anmeldetag: 10.01.2012
(51) Int. Cl.: G02B 27/09

(54) **VORRICHTUNG ZUR UMWANDLUNG DES PROFILS EINER LASERSTRAHLUNG IN LASERSTRAHLUNG MIT EINEM M-PROFIL**
DEVICE FOR CONVERTING THE PROFILE OF A LASER BEAM INTO A LASER BEAM WITH AN M-PROFILE
DISPOSITIF DE CONVERSION DU PROFIL D'UN FAISCEAU LASER EN UN FAISCEAU LASER AVEC UN PROFIL M

(30) Priorität: 10.01.2011 DE 102011008192
(43) Veröffentlichungstag der Anmeldung: 20.11.2013
(73) Patentinhaber: LIMO GmbH, 44319 Dortmund (DE)
(72) Erfinder: MIKLIAEV, Iouri, Cheljabinsk 454025 (RU); MEINSCHIEN, Jens, 44137 Dortmund (DE); MITRA, Thomas, 44309 Dortmund (DE)
(74) Vertreter: Basfeld, Rainer
(86) Internationale Anmeldenummer: PCT/EP2012/050310
(87) Internationale Veröffentlichungsnummer: WO 2012/095422

(56) Entgegenhaltungen:
- WO-A1-2005/103795
- WO-A1-2006/137355
- WO-A2-2010/124028
- JP-A- 2009 037 715
- US-A1- 2004 156 130
- US-A1- 2007 195 263
- US-A1- 2009 250 095

## Beschreibung

Die vorliegende Erfindung betrifft eine Vorrichtung zur Umwandlung des Profils einer Laserstrahlung in Laserstrahlung mit einem M-Profil gemäß dem Oberbegriff des Anspruchs 1.

Definitionen: In Ausbreitungsrichtung der Laserstrahlung meint mittlere Ausbreitungsrichtung der Laserstrahlung, insbesondere wenn diese keine ebene Welle ist oder zumindest teilweise divergent ist. Mit Laserstrahl, Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl, der keinen infinitesimal kleinen, sondern einen ausgedehnten Strahlquerschnitt aufweist. Mit M-Verteilung oder M-Intensitätsverteilung oder M-Profil wird ein Intensitätsprofil von Laserstrahlung bezeichnet, deren Querschnitt in der Mitte eine geringere Intensität als in einem oder mehreren außermittigen Bereichen aufweist. Mit Top-Hat-Verteilung oder Top-Hat-Intensitätsverteilung oder Top-Hat-Profil ist eine Intensitätsverteilung gemeint, die sich zumindest hinsichtlich einer Richtung im Wesentlichen durch eine Rechteckfunktion (rect (x)) beschreiben lässt. Dabei sollen reale Intensitätsverteilungen, die Abweichungen von einer Rechteckfunktion im Prozentbereich beziehungsweise geneigte Flanken aufweisen, ebenfalls als Top-Hat-Verteilung oder Top-Hat-Profil bezeichnet werden.

Eine Vorrichtung der eingangs genannten Art ist aus der US 2004/0161676 A1 bekannt. Die in dieser Schrift beschriebene Vorrichtung weist ein optisches System auf, das zur Ausleuchtung einer Amplituden-Modulations-Maske mit Laserstrahlung dient. Die Laserstrahlung kann dabei von einem KrF-Excimerlaser ausgehen.

Das aus der Maske austretende Licht wird von einem weiteren optischen System auf eine Phasen-Verschiebungs-Maske abgebildet. Das aus dieser Maske austretende Licht wird von einem weiteren optischen System auf ein zu bestrahlendes Substrat in einer Arbeitsebene abgebildet. Auf diesem Substrat weist die Laserstrahlung senkrecht zur Ausbreitungsrichtung eine ringförmige Intensitätsverteilung auf, die als M-Profil bezeichnet werden kann.

Als nachteilig hierbei erweist sich der komplizierte und aufwendige Aufbau der Vorrichtung. Weiterhin ergeben sich durch die Verwendung der Masken Verluste, die unter Umständen beträchtlich sein können.

Aus der US 2004/0156130 A1 ist eine Vorrichtung bekannt, mit der eine homogene Hintergrundbeleuchtung eines LCD-Displays gewährleistet werden kann. Zu diesem Zweck weist die Vorrichtung zwei auf der Vorderseite und der Rückseite eines Substrats angeordnete Linsenarrays auf. Hinter den Linsenarrays ist eine Sammellinse in Fourieranordnung vorgesehen, die das von den Linsenarrays ausgehende Licht in einer Arbeitsebene überlagert.

Aus der WO 2010/124028 A2 ist eine Wellenleiterstruktur bekannt, die auf die Struktur auftreffendes Licht sammeln und beispielsweise einem Photovoltaik-Element zuführen kann. Die Wellenleiterstruktur weist eine Mehrzahl von ringförmigen Linsen auf, die koaxial zueinander angeordnet sind. Auf der von der Eintrittsseite des Sonnenlichts abgewandten Seite weisen die Linsen prismatische Nuten auf, die eine innere Reflexion des durch die Linsen hindurch getretenen Lichts bewirken, so dass das Licht im Wesentlichen auf dem mittig angeordneten Photovoltaik-Element gesammelt wird.

Aus der US 2009/0250095 A1 ist eine lichtsammelnde Linse bekannt, die oberhalb eines Solarkollektors angeordnet werden kann. Die Linse hat einen kreisförmigen Umriss und besteht aus einer Mehrzahl von ringförmigen Prismen, die koaxial zueinander angeordnet sind.

Die WO 2005/103795 A1 offenbart ein transparentes Substrat, das auf seiner Vorderseite und auf seiner Rückseite jeweils ein Zylinderlinsenarray aufweist. Die Achsen der Zylinderlinsen auf der Vorderseite und auf der Rückseite stehen senkrecht zueinander. Die einzelnen Linsen weisen jeweils mittig einen asphärischen Querschnitt zweiter Ordnung und in ihren Randbereichen einen von diesem Querschnitt abweichenden Querschnitt auf, der von höheren geraden Ordnungen eines Polynoms dominiert wird.

Die US 2007/0195263 A1 offenbart eine Multifokus-Linse. Diese Linse weist eine äußere konvexe Linse, eine innere konkave Linse und zwischen diesen ringförmige Linsen auf, die koaxial zueinander angeordnet sind.

Aus der JP 2009 037715 A ist eine Linse bekannt, die für das Auslesen von Informationen von einer CD und/oder einer DVD verwendet werden kann. Die Linse weist auf einer konvexen Oberfläche eine Mehrzahl von ringförmigen sphärischen und prismatischen Strukturen auf, die koaxial zueinander angeordnet sind.

Die WO 2006/137355 A1 offenbart eine Multifokus-Linse mit einer Fresnelstruktur, die gleichzeitig eine konkave und eine konvexe Linse bildet. Durch unterschiedliche Brennweiten der konkaven und der konvexen Linsen kann in Fotographie-Anwendungen eine distanzunabhängige Modifikation der gewonnenen Bilder erreicht werden.

Das der vorliegenden Erfindung zugrunde liegende Problem ist die Schaffung einer Vorrichtung der eingangs genannten Art, die einfacher und effektiver aufgebaut ist.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Vorrichtung zur Umwandlung des Profils einer rotationssymmetrischen Laserstrahlung, die ein Gauß-Profil oder das Profil einer aus einer Lichtleitfaser austretenden Laserstrahlung eines Multimodelasers aufweist, in Laserstrahlung mit einem M-Profil geeignet ist, wobei zumindest eine erste und eine zweite der Linsen kreisringförmig ausgebildet sind und der Durchmesser der ersten Linse kleiner als der Durchmesser der zweiten Linse ist, wobei eine jede der Linsen so geformt oder gestaltet ist, dass sie eine Winkelverteilung erzeugt, die im Fernfeld der gewünschten radialen Intensitätsverteilung entspricht. Durch eine derartige Gestaltung lässt sich mit einfachen Mitteln und effektiv Laserstrahlung in Laserstrahlung mit einem M-Profil umwandeln. Dabei können mit einer erfindungsgemäßen Vorrichtung nicht nur Laserstrahlungen mit einem Gauß-Profil, sondern auch die aus einer Lichtleitfaser austretende Laserstrahlung eines Multimodelasers in eine gewünschte rotationssymmetrische Intensitätsverteilung mit einem M-Profil umgewandelt werden.

Als Anwendungen für eine derartige Vorrichtung kommen das Pumpen von Festkörperlasern oder auch Materialbearbeitungen in Betracht. Insbesondere kann bei der Materialbearbeitung eine Intensitätsverteilung mit einem M-Profil aufgrund von Wärmeleitung zu einer gleichmäßigen Bearbeitung führen.

Beispielsweise sind dabei die Linsen des mindestens einen Linsenarrays koaxial zur optischen Achse des mindestens einen Linsenarrays angeordnet. Insbesondere kann die optische Achse des mindestens einen Linsenarrays parallel zu der Ausbreitungsrichtung der Laserstrahlung sein.

Die Linsen bilden also beispielsweise ein System konzentrischer Ringe.

Es kann vorgesehen sein, dass zumindest eine erste der Linsen und zumindest eine zweite der Linsen aus voneinander verschiedenen Materialien bestehen. Dadurch ergibt sich ein größerer Spielraum bei der Gestaltung des Linsenarrays.

Es besteht die Möglichkeit, dass die Optikmittel mindesten eine Linse umfassen, die derart in der Vorrichtung angeordnet ist, dass das mindestens eine Linsenarray in der eingangsseitigen Brennebene und die Arbeitsebene in der ausgangsseitigen Brennebene der Linse angeordnet ist. Damit entsteht eine Fourieranordnung, wobei die Winkelverteilung der aus dem mindestens einen Linsenarray austretenden Laserstrahlung in eine Intensitätsverteilung in der Arbeitsebene transformiert wird.

Die Vorrichtung ist derart gestaltet, dass eine Mehrzahl von Intensitätsverteilungen, die bereits jeweils schon die gewünschte Form aufweisen, zu einer gemeinsamen Intensitätsverteilung überlagert werden.

Es besteht die Möglichkeit, dass die Vorrichtung zwei Linsenarrays mit jeweils mindestens zwei Linsen umfasst, wobei die von der Laserlichtquelle ausgehende Laserstrahlung erst durch das erste Linsenarray und danach durch das zweite Linsenarray hindurchtreten kann, wobei die Optikmittel die durch das zweite Linsenarray hindurchgetretene Laserstrahlung in eine Arbeitsebene einbringen und/oder in der Arbeitsebene zumindest abschnittsweise überlagern können.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische perspektivische Ansicht einer erfindungsgemäßen Vorrichtung;
- Fig. 2: ein 3D-Modell eines Ausführungsbeispiels des Linsenarrays der Vorrichtung;
- Fig. 3: einen Querschnitt durch das Linsenarray mit einer beispielhaften Ausprägung der Oberflächenform der Linsen.

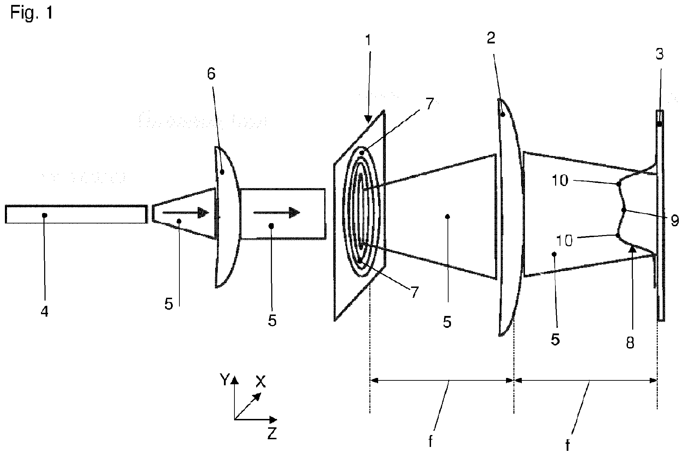

Zur Verdeutlichung ist in Fig. 1 ein kartesisches Koordinatensystem eingezeichnet.

Die abgebildete Vorrichtung umfasst ein Linsenarray 1 und eine Linse 2 in Fourieranordnung. Dabei entspricht der Abstand der Linse 2 von dem Linsenarray 1 in Z-Richtung und der Abstand der Linse 2 von einer sich in einer X-Y-Ebene erstreckenden Arbeitsebene 3 in Z-Richtung jeweils der Brennweite f der Linse 2.

Als Laserlichtquelle dient das Ende einer Lichtleitfaser 4. Das durch die Lichtleitfaser 4 propagierende Laserlicht 5 kann dabei von einem beliebigen Laser erzeugt werden. Die von der Lichtleitfaser 4 in positiver Z-Richtung ausgehende Laserstrahlung 5 wird von schematisch angedeuteten Kollimiermitteln 6 kollimiert. Die Kollimiermittel 6 können im einfachsten Fall wie in der Fig. 1 als plankonvexe sphärische Linse ausgebildet sein.

Es besteht durchaus die Möglichkeit, auf Kollimiermittel zu verzichten oder diese anders zu gestalten, so dass die Laserstrahlung nicht kollimiert wird.

In dem abgebildeten Ausführungsbeispiel trifft das kollimierte Laserlicht 5 auf das Linsenarray 1. Das Linsenarray 1 ist parallel zu einer X-Y-Ebene ausgerichtet und umfasst eine Mehrzahl von Linsen 7, die als konzentrische Ringe die optische Achse des Linsenarrays 1 umgeben. Dabei kann die optische Achse des Linsenarrays 1 parallel zur Z-Richtung sein und damit parallel zur mittleren Ausbreitungsrichtung der kollimierten Laserstrahlung 5.

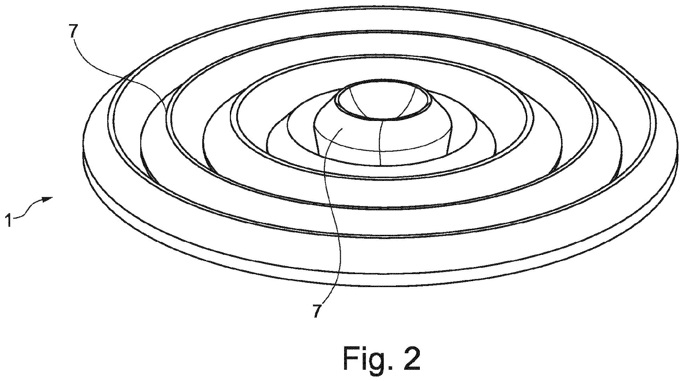

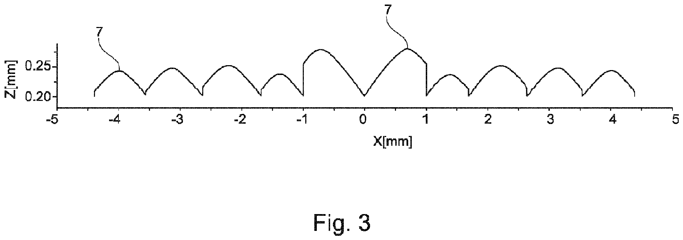

Die Linsen 7 können konvexe, konkave oder auch alternierend konvexe und konkave Formen aufweisen. Die Abstände, Radien und Dicken der Linsen 7 können weitgehend frei gewählt werden. Die Linsenform ist so gewählt, dass im Fernfeld die gewünschte radiale Intensitätsverteilung erzeugt wird. Insgesamt ist die Form der Linsen 7 vorzugsweise asphärisch. Fig. 2 und Fig. 3 zeigen beispielhafte Ausgestaltungen des Linsenarrays 1.

Über geeignete Optimierungsverfahren können Polynome erzeugt werden, die von den spezifischen Randbedingungen wie Brechungsindex, numerische Apertur und Radien der ringförmigen Linsen 7 abhängen. Die Oberflächenform kann dann für jede ringförmige Linse 7 einzeln aus diesen Polynomen berechnet werden. Die Oberfläche des Linsenarrays 1 wird somit im allgemeinen Fall eine rotationssymmetrische Freiformoberfläche sein.

Es besteht auch die Möglichkeit, dass als Linsen 7 Gradientenindexlinsen verwendet werden.

Nach dem Hindurchtritt durch das Linsenarray 1 weist die Laserstrahlung 5 eine Winkelverteilung auf, die eine Winkelverteilung eines M-Profils ist. Diese Winkelverteilung wird von der Linse 2 in eine schematisch in Fig. 1 angedeutete Intensitätsverteilung 8 in der Arbeitsebene 3 umgewandelt. Die Intensitätsverteilung 8 zeigt eine typische M-Verteilung mit einem lokalen Minimum 9 in der Mitte und zwei sich weiter außen daran anschließenden lokalen Maxima 10.

Es besteht insbesondere die Möglichkeit, dass eine jede der Linsen 7 so geformt oder gestaltet ist, dass sie eine Winkelverteilung erzeugt, die im Fernfeld der gewünschten radialen Intensitätsverteilung entspricht. Diese Mehrzahl von Winkelverteilungen mit dem gewünschten radialen Profil wird von der Linse 2 in die gewünschte radiale Intensitätsverteilung in der Arbeitsebene 3 umgewandelt, wobei in diesem Fall eine Mehrzahl von Intensitätsverteilungen, die bereits jeweils schon die gewünschte Form aufweisen, zu einer gemeinsamen Intensitätsverteilung überlagert werden.

Es besteht die Möglichkeit, dass die einzelnen Linsen 7 aus unterschiedlichen Materialien bestehen. Beispielsweise kann also eine erste der Linsen 7 aus einem ersten Material und eine zweite der Linsen 7 aus einem zweiten Material bestehen.

Es besteht weiterhin die Möglichkeit, zwei in Ausbreitungsrichtung der Laserstrahlung 5 hintereinander angeordnete Linsenarrays vorzusehen, die beide zwischen der Laserlichtquelle und der als Fourierlinse dienenden Linse 2 angeordnet sind. Auf diese Weise kann eine zweistufige Homogenisierung erreicht werden. Dabei kann das als erste Stufe dienende Linsenarray verhindern, dass das als zweite Stufe dienende Linsenarray mit einer zu hohen Intensität beaufschlagt wird beziehungsweise überstrahlt wird.

## Patentansprüche

1. Vorrichtung zur Umwandlung des Profils einer Laserstrahlung (5) in Laserstrahlung (5) mit einem M-Profil, umfassend
- mindestens ein Linsenarray (1) mit mindestens zwei Linsen (7), die koaxial oder konzentrisch zueinander angeordnet sind und durch die die umzuwandelnde Laserstrahlung (5) hindurchtreten kann, sowie
- Optikmittel, die in Fourieranordnung die Winkelverteilung der durch das mindestens eine Linsenarray (1) hindurchgetretenen Laserstrahlung (5) in eine radiale Intensitätsverteilung (8) mit einem M-Profil in einer Arbeitsebene (3) umwandeln können,
**dadurch gekennzeichnet, dass** die Vorrichtung zur Umwandlung des Profils einer rotationssymmetrischen Laserstrahlung (5), die ein Gauß-Profil oder das Profil einer aus einer Lichtleitfaser austretenden Laserstrahlung eines Multimodelasers aufweist, in Laserstrahlung (5) mit einem M-Profil geeignet ist, wobei zumindest eine erste und eine zweite der Linsen (7) kreisringförmig ausgebildet sind und der Durchmesser der ersten Linse (7) kleiner als der Durchmesser der zweiten Linse (7) ist, wobei eine jede der Linsen (7) so geformt oder gestaltet ist, dass sie eine Winkelverteilung erzeugt, die im Fernfeld der radialen Intensitätsverteilung mit einem M-Profil entspricht.

2. Vorrichtung nach Anspruch 1, **dadurch gekennzeichnet, dass** die Linsen (7) des mindestens einen Linsenarrays (1) koaxial zur optischen Achse des mindestens einen Linsenarrays (1) angeordnet sind.

3. Vorrichtung nach Anspruch 2, **dadurch gekennzeichnet, dass** die optische Achse des mindestens einen Linsenarrays (1) parallel zu der Ausbreitungsrichtung der Laserstrahlung (5) ist.

4. Vorrichtung nach einem der Ansprüche 1 bis 3, **dadurch gekennzeichnet, dass** zumindest eine erste der Linsen (7) und zumindest eine zweite der Linsen (7) aus voneinander verschiedenen Materialien bestehen.

5. Vorrichtung nach einem der Ansprüche 1 bis 4, **dadurch gekennzeichnet, dass** die Optikmittel mindestens eine Linse (2) umfassen, die derart in der Vorrichtung angeordnet ist, dass das mindestens eine Linsenarray (1) in der eingangsseitigen Brennebene und die Arbeitsebene (3) in der ausgangsseitigen Brennebene der Linse (2) angeordnet ist.

6. Vorrichtung nach einem der Ansprüche 1 bis 5, **dadurch gekennzeichnet, dass** die Vorrichtung zwei Linsenarrays (1) mit jeweils mindestens zwei Linsen (7) umfasst, wobei die von der Laserlichtquelle ausgehende Laserstrahlung (5) erst durch das erste Linsenarray (1) und danach durch das zweite Linsenarray hindurchtreten kann, wobei die Optikmittel die durch das zweite Linsenarray hindurchgetretene Laserstrahlung (5) in eine Arbeitsebene (3) einbringen und/oder in der Arbeitsebene (3) zumindest abschnittsweise überlagern können.

## Claims

1. Device for converting the profile of a laser beam (5) into a laser beam (5) with an M-profile, including
- at least one lens array (1) having at least two lenses (7) which are disposed coaxially or concentrically to one another and through which the laser beam (5) to be converted can pass, and
- optical means which in Fourier configuration can convert the angular distribution of the laser beam (5) which is passed through the at least one lens array (1) into a radial intensity distribution (8) with an M-profile in a working plane (3),
**characterised in that** the device is suitable for converting the profile of a rotationally symmetrical laser beam (5), which has a Gaussian profile or the profile of a laser beam, emerging from an optical fibre, of a multimode laser, into a laser beam (5) with an M-profile, wherein at least a first and a second of the lenses (7) are formed as circular rings and the diameter of the first lens (7) is smaller than the diameter of the second lens (7), wherein each one of the lenses (7) is formed or designed such that it generates an angular distribution which in the far field corresponds to the radial intensity distribution with an M-profile.

2. Device according to claim 1, **characterised in that** the lenses (7) of the at least one lens array (1) are disposed coaxially to the optical axis of the at least one lens array (1).

3. Device according to claim 2, **characterised in that** the optical axis of the at least one lens array (1) is parallel to the propagation direction of the laser beam (5).

4. Device according to any of claims 1 to 3, **characterised in that** at least one first of the lenses (7) and at least one second of the lenses (7) consist of materials different from one another.

5. Device according to any of claims 1 to 4, **characterised in that** the optical means include at least one lens (2) which is disposed in the device such that the at least one lens array (1) is disposed in the ingoing focal plane and the working plane (3) is disposed in the outgoing focal plane of the lens (2).

6. Device according to any of claims 1 to 5, **characterised in that** the device includes two lens arrays (1) having respectively at least two lenses (7), wherein the laser beam (5) emerging from the laser light source can pass first through the first lens array (1) and thereafter through the second lens array, wherein the optical means can introduce the laser beam (5) passing through the second lens array into a working plane (3) and/or can at least in sections superimpose in the working plane (3) the laser beam (5) passing through the second lens array.

## Revendications

1. Dispositif de conversion du profil d'un faisceau laser (5) en faisceau laser (5) avec un profil M, comprenant :
- au moins un réseau de lentilles (1) avec au moins deux lentilles (7) qui sont agencées coaxialement ou concentriquement l'une à l'autre et à travers lesquelles le faisceau laser à convertir (5) peut passer, ainsi que
- des moyens optiques qui peuvent en transformation de Fourier convertir la distribution angulaire du faisceau laser (5) passé à travers le au moins un réseau de lentilles (1) en une distribution d'intensité radiale (8) avec un profil M dans un plan de travail (3),
**caractérisé en ce que** le dispositif convient pour convertir le profil d'un faisceau laser à symétrie de rotation (5), qui présente un profil de Gauss ou le profil d'un faisceau laser d'un laser multimode sortant d'une fibre optique, en un faisceau laser (5) avec un profil M, dans lequel au moins une première et une seconde des lentilles (7) ont une conformation annulaire et le diamètre de la première lentille (7) est plus petit que le diamètre de la seconde lentille (7), dans lequel l'une de chacune des lentilles (7) est conformée ou conçue de sorte qu'elle produise une distribution angulaire qui correspond dans le champ lointain à la distribution d'intensité radiale avec un profil M.

2. Dispositif selon la revendication 1, **caractérisé en ce que** les lentilles (7) du au moins un réseau de lentilles (1) sont agencées coaxialement à l'axe optique du au moins un réseau de lentilles (1).

3. Dispositif selon la revendication 2, **caractérisé en ce que** l'axe optique du au moins un réseau de lentilles (1) est parallèle à la direction de propagation du faisceau laser (5).

4. Dispositif selon l'une quelconque des revendications 1 à 3, **caractérisé en ce qu'**au moins une première des lentilles (7) et au moins une seconde des lentilles (7) sont constituées de matériaux différents l'un de l'autre.

5. Dispositif selon l'une quelconque des revendications 1 à 4, **caractérisé en ce que** les moyens optiques comprennent au moins une lentille (2) qui est agencée dans le dispositif en sorte que le au moins un réseau de lentilles (1) soit agencé dans le plan focal côté entrée et le plan de travail (3) dans le plan focal côté sortie de la lentille (2).

6. Dispositif selon l'une quelconque des revendications 1 à 5, **caractérisé en ce que** le dispositif comprend deux réseaux de lentilles (1) avec respectivement au moins deux lentilles (7), dans lequel le faisceau laser (5) partant de la source de lumière laser peut passer d'abord à travers le premier réseau de lentilles (1), puis à travers le second réseau de lentilles, dans lequel les moyens optiques introduisent le faisceau laser (5) passé à travers le second réseau de lentilles dans un plan de travail (3) et/ou peuvent se superposer dans le plan de travail (3) au moins par sections.
